# EUROPEAN PATENT APPLICATION

(11) **EP 4 607 757 A1**
(43) Date of publication of application: **27.08.2025**
(21) Application number: 25155770.8
(22) Date of filing: 04.02.2025
(51) Int. Cl.: H02K 1/02, H02K 1/14, H02K 21/16, H02K 29/03

(54) **STATOR AND VARIABLE FLUX MOTOR**

(30) Priority: 26.02.2024 JP 2024026495
(71) Applicant: Shinshu University, Matsumoto City, Nagano 390-8621 (JP); Sanyo Denki Co., Ltd., Toshima-ku, Tokyo 170-8451 (JP)
(72) Inventor: MIZUNO, Tsutomu, Nagano 380-8553 (JP); HORIUCHI, Manabu, Tokyo 170-8451 (JP)
(74) Representative: Mathys & Squire

(57) **Abstract**

Provided is a concentrated winding stator which includes: a winding; a plurality of main poles; and an auxiliary pole, in which the winding is wound around the plurality of main poles, the auxiliary pole is provided between the plurality of main poles, and the stator is configured to increase flux linkage of the winding further than under low load upon the auxiliary pole being magnetically saturated under high load.

## Description

### BACKGROUND

### 1. Technical Field

The present disclosure relates to a stator and a variable flux motor.

### 2. Related Art

A variable flux motor having the effect of variable flux that changes the amount of field flux during operation of the motor has been proposed. For example, a variable flux motor disclosed in JP-A-2017-17783 is provided with a bypass path for diverting a part of the magnetic flux of a permanent magnet to a rotor to achieve high efficiency under low load and under high load.

### SUMMARY

A stator according to the present embodiment is a concentrated winding stator including: a winding; a plurality of main poles; and an auxiliary pole. In the stator, the winding is wound around the plurality of main poles, the auxiliary pole is provided between the plurality of main poles, and the stator is configured to increase flux linkage of the winding further than under low load upon the auxiliary pole being magnetically saturated under high load.

### BRIEF DESCRIPTION OF DRAWINGS

Fig. 1 is a horizontal cross-sectional view orthogonal to a rotation axis of a motor according to a reference example;
Fig. 2 is a horizontal cross-sectional view orthogonal to a rotation axis of a motor according to the embodiment;
Fig. 3 is an efficiency map of the motor according to the reference example;
Fig. 4 is an efficiency map of the motor according to the embodiment;
Fig. 5 is a diagram illustrating flux density distribution of the motor according to the reference example;
Fig. 6 is a diagram illustrating flux density distribution of the motor according to the embodiment; and
Fig. 7 is a horizontal cross-sectional view orthogonal to a rotation axis of a motor according to another embodiment.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

However, the rotor of the variable flux motor disclosed in JP-A-2017-17783 is provided with the bypath path. In this case, it is necessary to consider the magnitude of the centrifugal force of the rotor during operation of the motor. Consequently, the degree of freedom in design is limited. Hence, a variable flux motor including a stator having a variable flux structure is being required.

An object of the present disclosure is to provide a stator having a variable flux structure that has high efficiency under low load and under high load. Moreover, another object of the present disclosure is to provide a variable flux motor including the stator.

A concentrated winding stator according to the present embodiment includes: a winding; a plurality of main poles; and an auxiliary pole, in which the winding is wound around the plurality of main poles, the auxiliary pole is provided between the plurality of main poles, and the stator is configured to increase flux linkage of the winding further than under low load upon the auxiliary pole being magnetically saturated under high load.

The variable flux motor according to the one aspect of the embodiment includes the stator and a rotor.

According to the embodiment, it is possible to provide a stator having a variable flux structure that has high efficiency under low load and under high load, and a variable flux motor including the stator.

The embodiment is described hereinafter with reference to the drawings. Note that descriptions of members having the same reference numerals as members already described are omitted in the detailed description for the sake of convenience. Moreover, the dimensions of each member illustrated in the drawings may be different from actual dimensions thereof for convenience of description.

### Reference Example

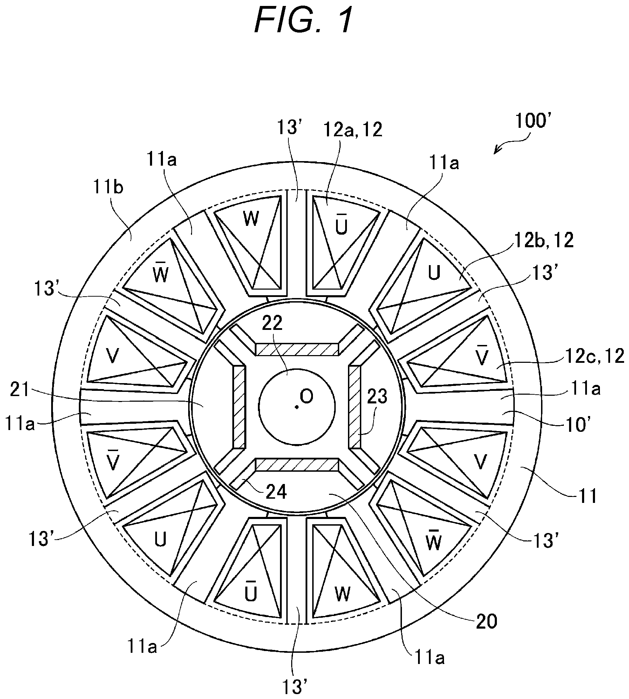

A motor 100' according to a reference example is described for comparison, using Fig. 1, before a motor 100 according to the embodiment is descried in detail.

Fig. 1 is a horizontal cross-sectional view orthogonal to a rotation axis of the motor 100' according to the reference example. The motor 100' illustrated in Fig. 1 has an interior permanent magnet synchronous motor (IPMSM) structure with the number of slots per pole per phase q = 0.5, the structure having four poles, six slots, and three phases, and concentrated winding. Moreover, the rotating field motor 100' includes a stator 10' and a rotor 20' that can rotate relative to the stator 10'.

The stator 10' includes a ring-shaped stator core 11. The stator core 11 is formed of a plurality of electromagnetic steel plates laminated in a rotation axis direction (a direction perpendicular to the page of Fig. 1). The stator core 11 includes a soft magnetic material, and includes a ring-shaped yoke portion 11b and six main pole portions (teeth) 11a. The main pole portions (teeth) 11a are portions that have approximately T-shape in plan view and protrude from a radially inner side of the yoke portion 11b. The six main pole portions 11a have substantially the same shape, and are supported by the yoke portion 11b. Slots are provided each between two adjacent main pole portions 11a. Stator coils 12 are installed in the slots.

The stator coils 12 are wound around the main pole portions 11a, respectively, in a concentrated winding form. Alternating current is applied from the outside to the stator coils 12. The phases of currents passing through two portions of each of the stator coils 12 separated by its corresponding main pole portion 11a are opposite to each other. For example, when an inverted phase U and a phase U pass through two portions 12a and 12b of the stator coil 12 separated by the main pole portion 11a, respectively. Moreover, air gap portions 13' are provided between adjacent stator coils 12 (for example, between the portion 12b and a portion 12c). There is no member in the air gap portions 13'. Air is filled in the air gap portions 13'.

The rotor 20 includes a rotor core 21 formed of a plurality of electromagnetic steel plates laminated in the rotation axis direction. The rotor core 21 has a cylindrical shape. An inner peripheral surface of the rotor core 21 delimits a shaft mounting hole 22. An unillustrated drive shaft is fixed in the shaft mounting hole 22. The drive shaft is supported by an unillustrated housing in such a manner as to be rotatable about a rotation center O.

The rotor 20 includes a plurality of rotor magnets 23 placed in the rotor core 21. The rotor magnets 23 include circular columnar permanent magnets embedded in slots. The plurality of rotor magnets 23 has substantially the same size, material, and composition. Moreover, the plurality of rotor magnets 23 is placed in such a manner as to form four different poles located an angle of 90° apart on a circumference around the rotation center O. In this manner, the plurality of rotor magnets 23 is spaced equally along the circumference. Therefore, the plurality of rotor magnets 23 generates magnetomotive force for substantially the same stator coils 12. Moreover, two end portions of each of the plurality of rotor magnets 23 are each provided with a rotor air gap portion 24 extending radially outward in the rotor core 21. There is no member in the rotor air gap portions 24. Air is filled in the rotor air gap portions 24.

### Embodiment

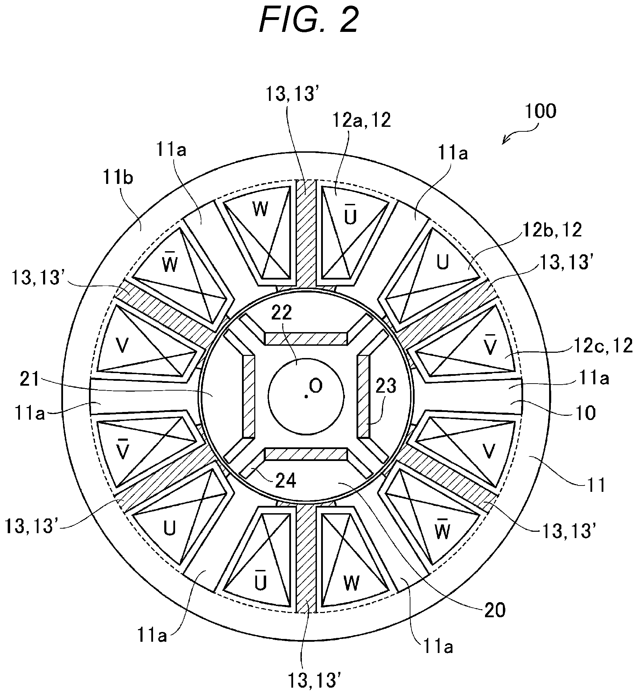

Fig. 2 is a horizontal cross-sectional view orthogonal to a rotation axis of the motor 100 according to the embodiment. Only parts of the configuration of the motor 100, which are different from the configuration of the motor 100' according to the reference example illustrated in Fig. 1, are described below.

The stator core 11 includes two or more soft magnetic materials having different magnetic properties. Specifically, the yoke portion 11b and the main pole portions 11a, which are included in the stator core 11, include a single soft magnetic material. On the other hand, auxiliary pole portions 13 included in the stator core 11 include a soft magnetic material different from the yoke portion 11b and the main pole portions 11a. The auxiliary pole portions 13 are portions that have approximately T-shape in plan view and protrude from the radially inner side of the yoke portion 11b. The auxiliary pole portions 13 are provided in the air gap portions 13', each between two adjacent stator coils 12.

For example, electromagnetic steel plates may be used for the main pole portions 11a. For example, a dust core obtained by compression molding of Ni-Fe alloy (permalloy) magnetic powder can be used for the auxiliary pole portions 13. Alternatively, a magnetic composite material obtained by thermal curing of polymer resin kneaded with permalloy magnetic powder may be used.

The soft magnetic material included in the main pole portions 11a is different from the soft magnetic material included in the auxiliary pole portions 13. Hence, saturation magnetization of the main pole portions 11a is different from saturation magnetization of the auxiliary pole portions 13. Here, the saturation magnetization of the soft magnetic material included in the main pole portions 11a is defined as Ms1. Moreover, the saturation magnetization of the soft magnetic material included in the auxiliary pole portions 13 is defined as Ms2. It is desirable that a relation, Ms1 > Ms2, hold. If the above relation holds, when the motor 100 is under high load, the main pole portions 11a do not reach the saturation magnetization Ms1 even after a current value starts being supplied. However, the auxiliary pole portions 13 reach the saturation magnetization Ms2. Hence, the magnetic flux passing through the main pole portions 11a increases. Consequently, flux linkage of the stator coils 12 increases under high load. As a result, torque T on the motor 100 can be increased. Note that in the embodiment, high load is defined as a load of 50% or greater of the maximum torque on the motor 100, and low load is defined as a load of 50% or less of the maximum torque on the motor 100.

Moreover, the relative permeability of the main pole portions 11a is also different from the relative permeability of the auxiliary pole portions 13. Here, the relative permeability of the soft magnetic material included in the main pole portions 11a is defined as µr1. Moreover, the relative permeability of the soft magnetic material included in the auxiliary pole portions 13 is defined as µr2. It is desirable that a relation, µr1 < µr2, hold. In the structure of the motor 100 according to the embodiment, the auxiliary pole portions 13 are provided to the air gap portions 13'. Hence, the winding space for the stator coil 12 is reduced by the auxiliary pole portion 13 as compared to the motor 100' according to the reference example. Hence, the coil space factor decreases. As a result, copper loss of the motor increases. Therefore, it is desirable that the auxiliary pole portions 13 have a shape that is narrow in width in a circumferential direction of the yoke portion 11b to prevent a decrease in the coil space factor. Moreover, if the shape of the auxiliary pole portions 13 is narrow in width in the circumferential direction, the magnetic flux resists being induced from the rotor magnets 23. Hence, it is desirable that the auxiliary pole portions 13 have the high relative permeability µr2 in such a manner that sufficient magnetic flux is induced from the rotor magnets 23 and the relation, µr1 < µr2, holds.

Moreover, the main pole portions 11a do not reach the saturation magnetization Ms1 when the motor 100 is under low load. Moreover, the auxiliary pole portions 13 do not reach Ms2, either. Hence, part of the magnetic flux from the rotor magnets 23 passes through the auxiliary pole portions 13, and produces leakage flux. As a result, induced voltages generated in the stator coils 12 are reduced, which results in a reduction in field weakening current. In other words, the magnetic flux also passes through the auxiliary pole portions 13, in addition to the main pole portions 11a, when the motor 100 is under low load. Hence, it is not that the number of slots of the stator 10 illustrated in Fig. 2 increases physically, but the stator 10 operates as if having an increased number of slots from a functional perspective. In other words, the stator 10 illustrated in Fig. 2 functions as a stator having double the number of slots as compared with the stator 10' illustrated in Fig. 1, the stator including four poles, 12 slots, and three phases.

Moreover, when the motor 100 is under high load, the main pole portions 11a do not reach the saturation magnetization Ms1, whereas the auxiliary pole portions 13 reach the saturation magnetization Ms2. Hence, the magnetic flux from the rotor magnets 23, which passes through the auxiliary pole portions 13, does not increase. As a result, the magnetic flux that passes through the main pole portions 11a is not reduced. The flux linkage of the stator coils 12 increases as compared to under low load, which increases the torque T on the motor 100. In other words, the stator 10 illustrated in Fig. 2 functions as a stator including four poles, six slots, and three phases as in the stator 10' illustrated in Fig. 1.

In this manner, the stator 10 is provided with the auxiliary pole portions 13. Accordingly, the motor 100 functions as a variable flux motor having a variable flux structure.

Note that a winding factor for four poles, six slots, and three phases is defined as kw1. Moreover, a winding factor for four poles, 12 slots, and three phases is defined as kw2. The stator 10 functions as four poles, 12 slots, and three phases when the motor 100 is under low load. Hence, the winding factor is kw2. Moreover, the stator 10 functions as four poles, six slots, and three phases when the motor 100 is under high load. Hence, the winding factor is kw1. At this point in time, it is desirable that the windings of the stator coils 12 of the stator 10 be placed in such a manner that a relation, kw1 > kw2, holds. Note that the winding factor is obtained from the product of a distributed winding factor and a fractional pitch winding factor. In other words, the fractional pitch winding factor is a value determined by the configuration of the number of pole pairs and the configuration of the number of slots.

### (Efficiency Map)

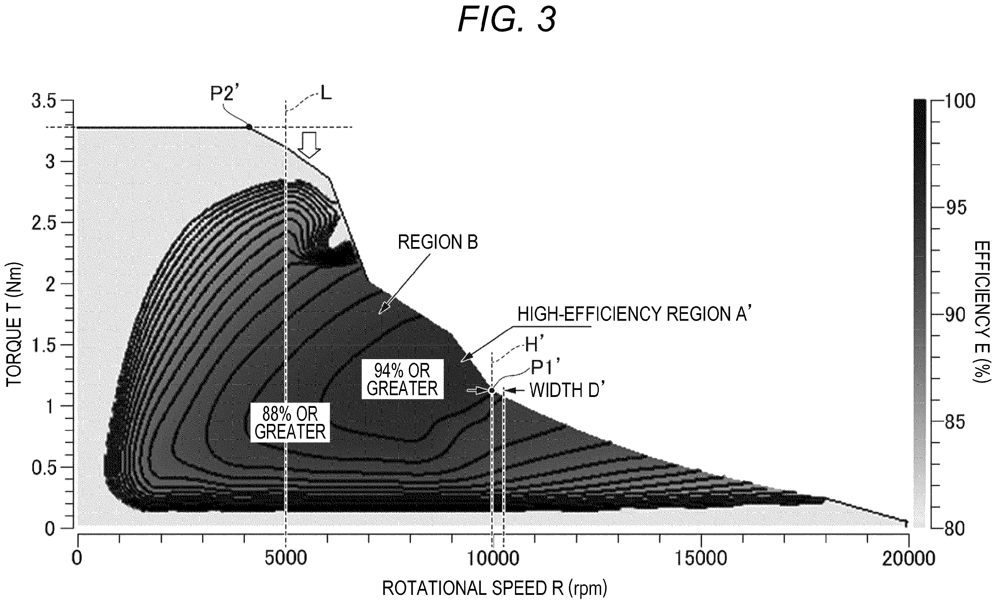

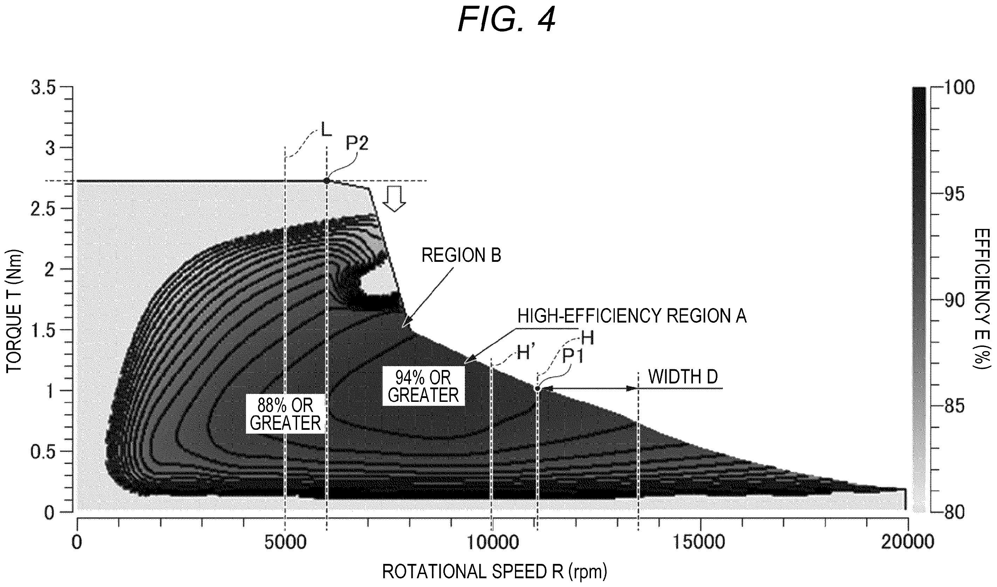

An efficiency map of the motor 100 according to the embodiment is described, using an efficiency map of the motor 100' according to the reference example for comparison. Fig. 3 illustrates the efficiency map of the motor 100' according to the reference example. Fig. 4 illustrates the efficiency map of the motor 100 according to the embodiment. The horizontal axis represents a rotational speed R of the motor in both Figs. 3 and 4. The vertical axis represents the torque T. Each shaded region of the efficiency map represents efficiency E of the motor according to the level of darkness. Moreover, an efficiency region illustrated in the efficiency map is divided into regions delimited by contour lines provided in every 6% efficiency. For example, in the efficiency map of Fig. 4, a part of the efficiency region is divided into a high-efficiency region A that represents an efficiency E of 94% or greater, and a region B that represents an efficiency E of 88% or greater and less than 94%.

As illustrated in Fig. 3, in the motor 100' according to the reference example, a high-efficiency region A' remains within a range of a rotational speed R of 10000 rpm or less (a region on the left side of a broken line H' passing through a point P 1' of Fig. 3). Moreover, an interval D' between two rotational speed boundaries that correspond to the region B of the efficiency E is narrow at high speed and under low load, that is, in a range of a rotational speed R of 10000 rpm or greater (in a region on the right side of the broken line H' of Fig. 3). Consequently, it is understood that as the rotational speed R increases, the efficiency E decreases sharply.

Moreover, the torque reaches a point P2' corresponding to a rotational speed R of 4000 rpm and then the efficiency E starts decreasing, at low speed and under high load, that is, in a range of a rotational speed R of 5000 rpm or less (a region on the left side of a broken line L of Fig. 3).

Contrarily, as illustrated in Fig. 4, in the motor 100 according to the embodiment, the high-efficiency region A extends to a range of a rotational speed R of 12200 rpm or less (a region on the left side of a broken line H passing through a point P1 of Fig. 4). Moreover, an interval D between two rotational speed boundaries that correspond to the region B of the efficiency E extends further than in Fig. 3, at high speed and under low load, that is, in a range of a rotational speed R of 10000 rpm or greater (a region on the right side of a broken line H' of Fig. 4). Consequently, as the rotational speed R rises, the efficiency E decreases more gently.

Moreover, the efficiency E is maintained constant at low speed and under high load, that is, in a range of a rotational speed R of 5000 rpm or less (a region on the left side of a broken line L of Fig. 4). Consequently, the torque reaches a point P2 corresponding to a rotational speed R of 6000 rpm and then the efficiency E starts decreasing more gently.

Therefore, the motor 100 according to the embodiment has the higher efficiency E under low load and under high load as compared to the motor 100' according to the reference example.

### (Flux Density Distribution)

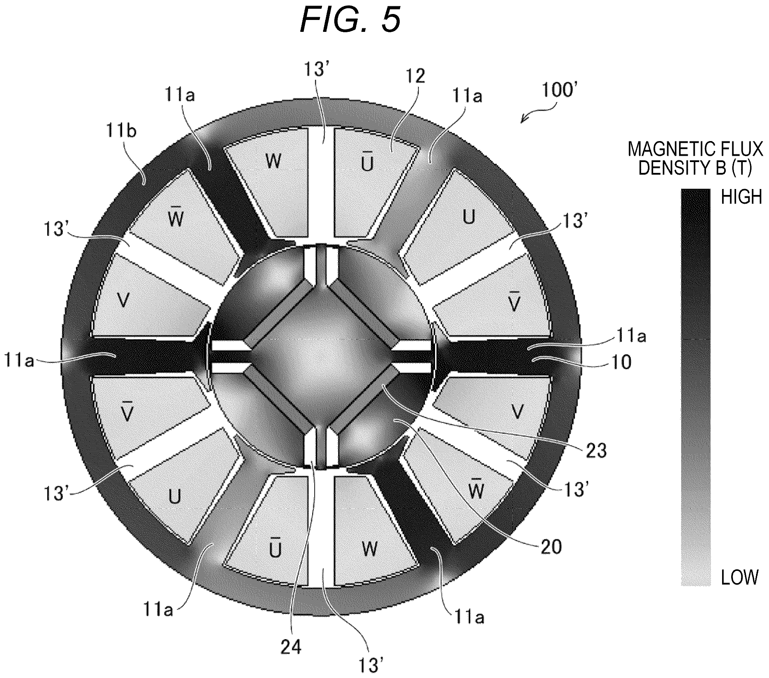

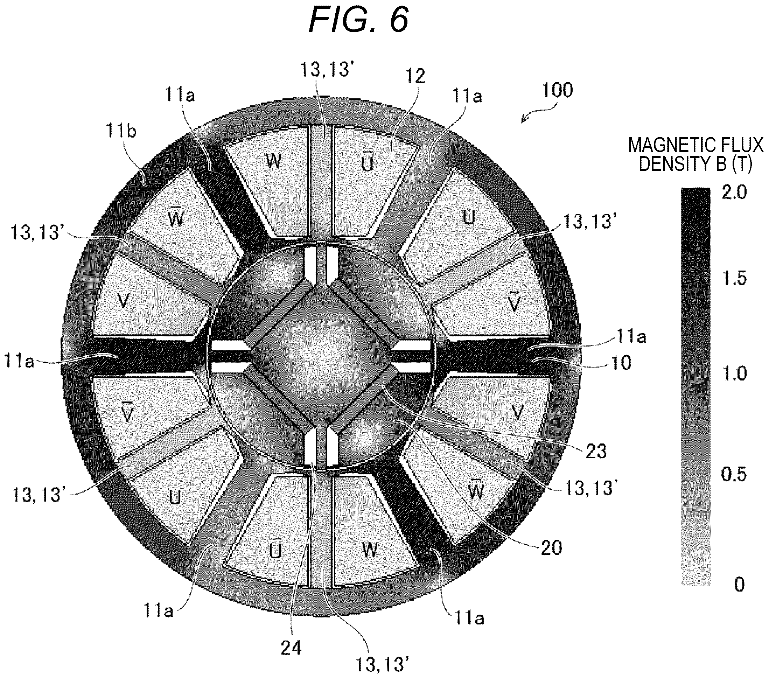

Flux density distribution of the motor 100 according to the embodiment is described, using flux density distribution of the motor 100' according to the reference example for comparison. Fig. 5 illustrates the flux density distribution of the motor 100' according to the reference example under high load. Fig. 6 illustrates the flux density distribution of the motor 100 according to the embodiment under high load. Both Figs. 5 and 6 illustrate the distribution of flux density according to the varying levels of darkness. Note that for convenience of description, the rotor 20 is displaced 45° in a rotational direction in horizontal cross-sectional views of the motors 100 and 100' illustrated in Figs. 5 and 6 from the horizontal cross-sectional views of the motors 100 and 100' illustrated in Figs. 1 and 2.

As illustrated in Fig. 5, in the motor 100' according to the reference example, the air gap portions 13' are filled with air. Hence, the relative permeability is as low as one. Hence, the magnetic flux from the rotor magnets 23 hardly passes through the air gap portions 13'. In addition, the magnetic flux from the rotor magnets 23 concentrates on the main pole portions 11a. Hence, the magnetic flux does not leak from the rotor magnets 23. As a result, the induced voltages generated in the stator coils 12 are not reduced, which does not result in a reduction in field weakening current. Consequently, the flux linkage of the stator coils 12 does not increase. As a result, the torque T on the motor 100 does not increase.

Contrarily, as illustrated in Fig. 6, the motor 100 according to the embodiment is provided with the auxiliary pole portions 13 having the relative permeability µr2 higher than the air gap portions 13'. Hence, the magnetic flux from the rotor magnets 23 does not concentrate on the main pole portions 11a. As a result, a part of the magnetic flux passes through the auxiliary pole portions 13. Consequently, flux leakage occurs and the induced voltages generated in the stator coils 12 are reduced, which results in a reduction in field weakening current. Consequently, the flux linkage of the stator coils 12 increases and the torque T on the motor 100 increases.

### Another Embodiment

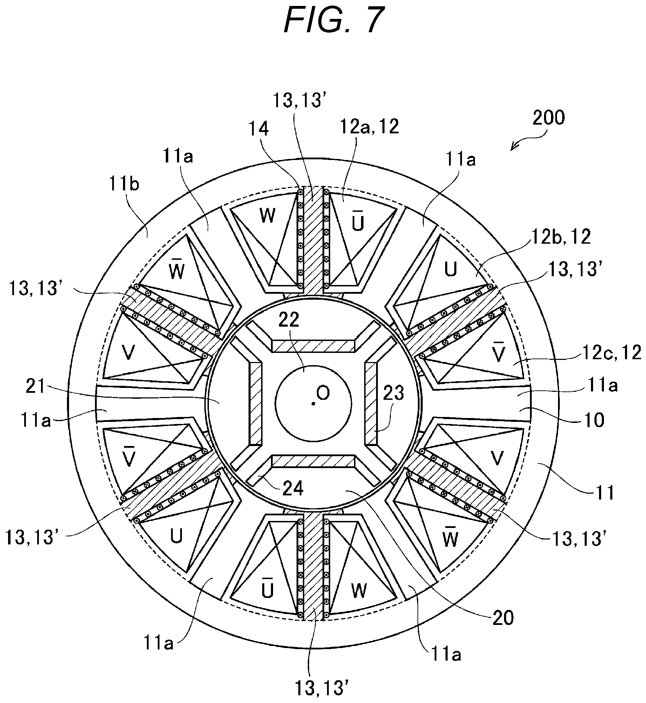

Fig. 7 is a horizontal cross-sectional view orthogonal to a rotation axis of a motor 200 according to another embodiment. Only parts of the configuration of the motor 200, which are different from the configuration of the motor 100 according to the embodiment illustrated in Fig. 2, are described below.

The example where the winding is not wound around the auxiliary pole portions 13 is described in the above-mentioned embodiment. However, an auxiliary winding 14 is wound around the auxiliary pole portions 13 of the motor 200 illustrated in Fig. 7. The auxiliary pole portions 13 may include a soft magnetic material different from the main pole portions 11a. Alternatively, the auxiliary pole portions 13 may include the same magnetic material as the main pole portions 11a. The auxiliary winding 14 different from the stator coils 12 is wound around the auxiliary pole portions 13. Hence, the auxiliary winding 14 is not electrically continuous with the stator coils 12 wound around the main pole portions 11a.

Moreover, the auxiliary pole portions 13 have three operating modes: an active variable flux operating mode, a passive variable flux operating mode, and an energy regeneration operating mode. The active variable flux operation may include two operating modes: a flux strengthening operation and a torque ripple reduction operation.

Here, the active variable flux operation indicates energization by power supplied from a power supply circuit connected to the auxiliary winding 14. In other words, the active variable flux operation indicates an operation in which the auxiliary pole portions 13 change the magnetic flux actively irrespective of the torque T on the motor 200. Furthermore, the flux strengthening operation is a kind of active variable flux operation. More specifically, the flux strengthening operation indicates an operation that increases the amount of magnetic flux passing through the auxiliary pole portions 13 by energization by the power supplied from the power supply circuit connected to the auxiliary winding 14 to increase the torque T on the motor 200. Furthermore, the torque ripple reduction operation is a kind of active variable flux operation. More specifically, the torque ripple reduction operation indicates an operation that superposes a torque harmonic component of an opposite phase to torque ripple of the motor 200 on the torque ripple. Here, the torque harmonic component is generated by energization by the power supplied from the power supply circuit connected to the auxiliary winding 14. Consequently, the torque ripple can be reduced.

Moreover, the passive variable flux operation indicates an operation in which the magnetic flux changes passively for a load, dependent only on the magnetic material properties of the unenergized auxiliary pole portions 13, by opening a terminal of the power supply circuit connected to the auxiliary winding 14.

Moreover, the energy regeneration operation indicates an operation that regenerates the power generated in the auxiliary winding 14 by the leakage flux from the rotor magnets 23 to a power supply of the power supply circuit connected to the auxiliary winding 14.

In this manner, the configuration including the auxiliary winding 14 that is wound around the auxiliary pole portions 13 and is different from the stator coils 12 enables achievement of at least three operating modes including the active variable flux operation, the passive variable flux operation, and the energy regeneration operation. Hence, efficiency under low load and under high load can be further improved.

As described above, the motor 100 according to the embodiment functions as the variable flux motor having the variable flux structure due to the auxiliary pole portions 13 provided to the stator 10. Hence, efficiency under low load and under high load can be improved.

Up to this point the embodiments have been described. However, it is needless to say that the technical scope of the embodiments should not be construed in a limited manner by the detailed description. The above-described embodiments are mere exemplifications. Those skilled in the art understand that the above-described embodiments can be modified in various manners within the scope of the disclosure of the claims. The technical scope of the embodiments should be determined on the basis of the scope of the disclosure of the claims and the scope of equivalents thereof. The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A concentrated winding stator comprising:
a winding;
a plurality of main poles; and
an auxiliary pole, wherein
the winding is wound around the plurality of main poles,
the auxiliary pole is provided between the plurality of main poles, and
the stator is configured to increase flux linkage of the winding further than under low load upon the auxiliary pole being magnetically saturated under high load.

2. The stator according to claim 1, wherein
the stator is configured to function as an armature of m poles and 2n slots under low load and function as an armature of m poles and n slots with the magnetically saturated auxiliary pole under high load, and
the m and the n are natural numbers.

3. The stator according to claim 2, wherein letting a winding factor for the m poles and n slots be kw1 and letting a winding factor for the m poles and 2n slots be kw2, an armature winding is placed in such a manner that a relation, kw1 > kw2, holds.

4. The stator according to claim 2, wherein letting saturation magnetization of a soft magnetic material included in the main poles be Ms1 and letting saturation magnetization of a soft magnetic material included in the auxiliary pole be Ms2, the stator is configured in such a manner that a relation, Ms1 > Ms2, holds.

5. The stator according to claim 2, wherein letting relative permeability of a soft magnetic material included in the main poles be µr1 and letting relative permeability of a soft magnetic material included in the auxiliary pole be µr2, the stator is configured in such a manner that a relation, µr1 < µr2, holds.

6. The stator according to claim 3, wherein letting relative permeability of a soft magnetic material included in the main poles be µr1 and letting relative permeability of a soft magnetic material included in the auxiliary pole be µr2, the stator is configured in such a manner that a relation, µr1 < µr2, holds.

7. The stator according to claim 1, wherein an auxiliary winding is wound around the auxiliary pole.

8. The stator according to claim 7, wherein the winding of the main poles and the auxiliary winding are connectable to different circuits, respectively.

9. The stator according to claim 7, wherein the auxiliary pole is capable of both of an active variable flux operation and a passive variable flux operation.

10. The stator according to claim 7, wherein the auxiliary pole is capable of a regenerative operation.

11. A variable flux motor comprising:
the stator according to any of claims 1 to 10; and
a rotor.
